# EUROPEAN PATENT SPECIFICATION

(11) **EP 3 482 094 B1**
(45) Date of publication and mention of the grant of the patent: **01.12.2021**
(21) Application number: 17745856.9
(22) Date of filing: 05.07.2017
(51) Int. Cl.: F16B 45/00, A47G 1/16

(54) **HOOK**
HAKEN
CROCHET

(30) Priority: 05.07.2016 GB 201611728; 29.11.2016 GB 201620228; 08.06.2017 GB 201709160
(43) Date of publication of application: 15.05.2019
(73) Proprietor: Grapplefix Limited, London SW6 4QP (GB)
(72) Inventor: TYZACK, Hugh, Oxford Oxfordshire OX28 1PA (GB)
(74) Representative: Dehns
(86) International application number: PCT/GB2017/051983
(87) International publication number: WO 2018/007812

(56) References cited:
- EP-A1- 0 010 833
- JP-A- 2004 125 044
- US-A- 406 255

## Description

This invention relates to a hook for hanging an item from a wall, in particular a hook for hanging an item from a suspended plasterboard wall.

A hook is a ubiquitous fixing for hanging an item from a wall. Typically a hook comprises an integral screw thread for attaching the hook to a wall, such that an item may then be hung from the hook, e.g. via a wire that is supported by the hook. However, such hooks are only suitable for hanging items of limited weight from them and may be ripped out of a suspended plasterboard wall when a heavy item is hung from them.

US 406 255 discloses a picture hanger having a cord attached to a hook via a cord-support. Projections below the cord-support hold the cord in an inwardly-deflected position.

The aim of the present invention is to provide an improved hook for hanging an item from a wall.

When viewed from a first aspect the invention provides a hook as claimed in claim 1.

The present invention relates to a hook for hanging an item from a wall. The hook is arranged to attach to a hole in the wall. The hook has a body portion that has front and rear faces, with the rear face designed to abut the wall. The body portion also has an arc shape edge between the respective perimeters of the front and rear faces, with a groove being formed in the arc shaped edge. The groove extends around the edge and is arranged to receive a wire that can be used to hang the item from the hook.

The rear face of the body portion has a raised portion that projects from the rear face. The raised portion is used to locate the hook in the hole in the wall. The body portion of the hook also has an aperture that is used for receiving a fastener (e.g. a screw or a bolt) to attach the hook to the hole in the wall. The aperture extends through the body portion from the front face to the rear face such that edge of the raised portion on the rear face of the body portion surrounds the aperture (i.e. surrounding the end of the aperture on the rear face).

Thus it will be seen that the hook provides a number of advantages over conventional hooks. First, the raised portion on the rear face of the body portion of the hook has a greater length perimeter than the aperture which the raised portion surrounds. Therefore, the raised portion, when inserted into the hole in the wall, provides an increased surface area for supporting the load of the item that is hung from the hook (compared, for example, to a conventional hook which contacts the wall over the reduced surface area of its, e.g., screw thread). This enables the hook of the present invention, at least in preferred embodiments, to be able to support the load of a heavier item.

Second, the extended groove formed in the arc shaped edge of the body portion of the hook has a greater length along which a wire (from which an item is hung) is supported (compared, for example, to a conventional hook on which a wire is generally hung from a relatively thin portion). Thus, for the hook of the present invention, the wire used to hang an item from the hook may be subject to reduced stresses, again enabling the hook to be able to support the load of a heavier item.

Third, when an item is hung from the hook when it is attached to a wall, the force acting downwards on the hook acts to try to angle the fastener downwards, which increases the tension in the fastener. However, this increases the friction of the rear face of the body portion against the wall, thus resisting the action of the force on the fastener and making the hook more effective for hanging the load of the item.

The body portion of the hook may be provided in any suitable and desired way. In a preferred embodiment the front face and/or the rear face are substantially planar. This helps the hook to lie flush with the wall and/or the item to be hung from the hook. Preferably the front face and the rear face have a substantially equal area.

The arc shaped edge is located between at least part of the respective perimeters of the front and rear faces of the body portion. Preferably the respective perimeters of the front and the rear faces of the body portion are aligned along at least the arc shaped edge, e.g. such that the arc shaped edge lies substantially perpendicular to the front and rear faces of the body portion. In a preferred embodiment the body portion (other than, e.g., the raised portion and the groove) comprises a cylinder (i.e. with the front and rear faces forming the ends of the cylinder and the arc shaped edge forming the side of the cylinder).

In a preferred embodiment the arc shaped edge extends around at least part of the respective perimeters of the front and rear faces of the body portion. In a preferred embodiment the arc shaped edge extends around the full respective perimeters of the front and rear faces of the body portion.

The arc shaped edge may have any suitable and desired arc shape. In a preferred embodiment the arc shaped edge forms an arc of a circle. Thus preferably the respective perimeter of the front and rear faces of the body portion each form an arc of a circle.

In a preferred embodiment the arc shaped edge forms a full circle. Thus preferably the front face and/or the rear face are substantially circular. Preferably the front face and the rear face are coaxial with each other.

Preferably the dimension (length) of the arc shaped edge in the direction in which the edge extends is (e.g. significantly) greater than the dimension (thickness) of the edge in a perpendicular direction (i.e. between (and, e.g., perpendicular to) the front and rear faces of the body portion).

The hook may be any suitable and desired size, e.g. for insertion into a hole in a wall of any suitable and desired size. In a preferred embodiment, when the perimeters of the front and/or rear faces of the body portion each form an arc of a circle, the arc has a radius of curvature of between 10 mm and 18 mm, e.g. approximately 12 mm or approximately 16 mm. Preferably the thickness of the edge is between 6 mm and 12 mm, e.g. approximately 8 mm or approximately 9.5 mm. This depth of the hook (i.e. the distance that it projects from a wall when attached thereto) is less than the distance by which many conventional hooks project when attached to a wall.

The groove formed in the arc shaped edge may have any suitable and desired configuration. In a preferred embodiment the groove extends in a plane substantially parallel to the front and/or the rear face of the body portion. Preferably the groove has a uniform depth along its length along the arc shaped edge and thus preferably the groove has the same shape as the arc shaped edge. Preferably the groove has a uniform width along its length along the arc shaped edge. Thus preferably the groove forms a channel extending around an arc of a circle, e.g. a channel extending around the circumference of a full circle.

It will be appreciated that when the groove is a full circle then the orientation of the hook may not matter (e.g. when all of the other components extend around the full circle), making it very easy to install as the hook may not need to be aligned before an item is hung therefrom. Furthermore, such a groove provides the maximum surface area for a wire (from which an item is hung) to hang from.

Preferably the groove has a depth of between 3 mm and 6 mm, e.g. approximately 4 mm or approximately 4.5 mm, and a width of between 2 mm and 3 mm, e.g. approximately 2.5 mm. Preferably the front edge of the groove is located between 2 mm and 6 mm behind the front face of the body portion, e.g. approximately 3.5 mm or approximately 5 mm.

The raised portion, that projects from the rear face of the body portion, may be provided in any suitable and desired way. The raised portion preferably has a circular perimeter (i.e. to fit within a circular hole in a wall). Preferably the perimeter of the raised portion is substantially continuous. The raised portion may be raised over the whole of its area, i.e. within its perimeter. However in a preferred embodiment the raised portion comprises a wall, e.g. a circular wall. Preferably the (e.g. circular) wall is substantially continuous.

When the (e.g. wall or perimeter of the) raised portion is circular, preferably the raised portion is coaxial with the (e.g. centre of the) aperture through the body portion. When the raised portion and the rear and/or front faces of the body portion are circular, preferably the raised portion is coaxial with the rear and/or front faces of the body portion.

In a preferred embodiment the perimeter of the raised portion lies substantially fully within the perimeter of the rear face of the body portion.

When the raised portion is raised over the whole of its area, preferably the aperture extends through the raised portion. When the raised portion comprises a wall, preferably the aperture extends through to the rear face of the body portion within the wall.

When the raised portion comprises a wall, preferably the rear face of the body portion outside the wall (which abuts the wall to which the hook is attached) is closer to the distal edge (i.e. the top) of the raised portion's wall than the rear face of the body portion inside the wall.

Preferably the raised portion projects from the rear face of the body portion by approximately 1 mm. When the raised portion comprises a wall, preferably the wall has a width of approximately 1 mm. When the raised portion comprises a wall, preferably the raised portion projects from the rear face of the body portion inside the wall by between 1 mm and 3 mm, e.g. approximately 1.5 mm or approximately 2 mm. When the raised portion comprises a wall, preferably the raised portion projects from the rear face of the body portion outside the wall by approximately 1 mm. When the raised portion has a circular perimeter, preferably the outer diameter of the raised portion is between 10 mm and 24 mm, e.g. approximately 12 mm or approximately 20 mm. When the raised portion comprises a circular wall, preferably the internal diameter of the raised portion is between 8 mm and 20 mm, e.g. approximately 10 mm or approximately 16 mm.

The aperture that extends through the body portion from the front face to the rear face may be provided in any suitable and desired way. The raised portion surrounds the aperture, so the raised portion engages with a hole in a wall that is larger than the aperture through the body portion. This means that preferably, when the hook is attached to the wall, the fastener does not contact the sides of the hole in the wall (but rather the edges of the raised portion do).

Preferably the aperture is straight and thus preferably comprises a cylinder (e.g. having a circular cross section) extending through the body portion. Preferably the aperture extends in a direction (e.g. parallel to the axis of the cylinder) substantially perpendicular to the front face and/or the rear face of the body portion.

In a preferred embodiment the aperture is located substantially at the centre of the body portion, e.g. the aperture extends from substantially the centre of the front face to substantially the centre of the rear face of the body portion. For example, when the arc shaped edge of the body portion comprises an arc of a circle, preferably the aperture is located at the centre of the circle. Thus when the rear and/or front faces of the body portion are circular, preferably the aperture is coaxial with the rear and/or front faces of the body portion. When the (e.g. perimeter of the) raised portion is circular, preferably the aperture is coaxial with the raised portion. These arrangements of the aperture, e.g. with respect to the groove, help to distribute the load of the item on the hook as evenly as possible.

The aperture may be arranged to receive any suitable and desired type of fastener. In a preferred embodiment the aperture is arranged to receive a screw or a bolt, e.g. a 4 mm diameter screw or an M4 bolt, or a 6 mm diameter screw or an M6 bolt. The aperture may be threaded however in a preferred embodiment the aperture has smooth sides (i.e. is not threaded). Thus preferably the aperture has a dimension perpendicular to the direction in which it extends (e.g. its diameter) that is (e.g. slightly) greater than the corresponding dimension of the fastener to be used to attach the hook to the wall. A non-threaded aperture helps to simplify the manufacture of the hook.

In a preferred embodiment (e.g. when the fastener intended to be used with the hook comprises a screw or a bolt) the front face of the body portion comprises a (e.g. circular) recess for receiving a head of a fastener. This enables the head of the fastener to lie flush or behind the front face of the body portion so that it does not project from the front face.

The recess and the groove may be positioned with respect to each other in any suitable and desired way. In a preferred embodiment the groove (e.g. the edge of the groove proximal to the front face of the body portion) is spaced from the front face by a distance that is greater than the depth of the recess. This helps to strengthen the hook as the part of the hook through which the load is taken via a wire in the groove is not weakened by the lack of material at the recess. Furthermore, this relative positioning of the groove and the recess provides a failsafe mechanism because if the body portion at the groove fails and the wire passes through the groove, the wire will be caught and retained by the fastener, which will generally still be attached to the hole in the wall.

In a preferred embodiment the aperture has a width (e.g. diameter) of between 3 mm and 7 mm, e.g. approximately 4 mm or approximately 6 mm. When the body portion comprises a recess, preferably the recess has a depth of between 2 mm and 6 mm, e.g. approximately 3 mm or approximately 4.5 mm. When the recess is circular, preferably the recess has a diameter of between 8 mm and 16 mm, e.g. approximately 10 mm or approximately 14 mm.

As will be appreciated from the various features of the hook described above, preferably the hook is rotationally symmetric about an axis passing through the centre of the aperture.

The hook may be made from any suitable and desired material. In a preferred embodiment the hook is made from plastic, e.g. nylon. In one embodiment the hook comprises glass fill, e.g. in the plastic. In a particularly preferred embodiment the fixing device is made of nylon (e.g. polyamide 66 or polyphthalamide (PPA)) with glass fill. The fixing device may comprise any suitable and desired fraction of glass fill. In one embodiment the material of the fixing device comprises between 25% and 65% glass fill, e.g. 50% glass fill. The hook may be manufactured in any suitable and desired way. In a preferred embodiment the hook is moulded, e.g. from plastic. In one embodiment, e.g. when the hook is moulded, the front face of the body portion comprises a (e.g. circular) groove surrounding the aperture. This helps with the manufacture of the hook, e.g. to aid cooling of the hook after moulding.

The hook may be used for attaching to any suitable and desired type of wall in which a hole for receiving the raised portion is formed (e.g. drilled). The fastener may be arranged to attach to the hole in any suitable and desired way. For example, the fastener may attach (e.g. screw into) a part of the wall behind the hole in the wall. However in a preferred embodiment a plug is inserted into the hole in the wall and the fastener is attached to the plug in the hole in the wall.

In a particularly preferred embodiment the plug is part of a fixing device that is attached to the wall to allow a fastener to be attached to and supported by the wall. Such a fixing device is conveniently used with a suspended plasterboard (e.g. stud) wall. The fixing device preferably comprises a plug portion for securing in a hole in a suspended plasterboard wall, the plug portion comprising an aperture for receiving a fastener; and a longitudinal backplate that projects from diametrically opposite sides of the plug portion, wherein the backplate is arranged in use to engage with the rear face of the suspended plasterboard wall when the plug portion is secured in the hole.

The plug portion of the fixing device may help to provide the locating and supporting function of the raised portion of the hook and thus in some embodiments it may not be necessary for the hook to comprise a raised portion. This is considered to be novel and inventive in its own right and thus when viewed from a further aspect the invention provides a kit as claimed in claim 13.

It will be appreciated by those skilled in the art that all of the described aspects and embodiments of the present invention can, and preferably do, include, as appropriate, any one or more or all of the preferred and optional features described herein. For example, preferably the hook comprises a raised portion projecting from the rear face of the body portion for locating the hook in the hole in the wall, wherein the edge of the raised portion surrounds the aperture extending through the body portion.

In use, preferably a hole is formed in a suspended plasterboard wall, the fixing device is attached to the hole in the wall (with the longitudinal backplate engaging with the rear face of the wall), the raised portion of the hook is inserted into the hole from the front face of the wall (when the hook comprises raised portion) and a fastener is used to attach the hook to the fixing device (e.g. sandwiching the suspended plasterboard wall therebetween). An item may then be hung from the hook via a wire that is received by the groove in the arc shaped edge of the hook.

This sandwiching of the suspended plasterboard wall between the hook and the fixing device will be appreciated to be particularly beneficial in aiding the hook in hanging a heavy load therefrom. This is because, in use, the (e.g. substantial) surface area of the rear face of the hook contacts one side of the wall to which the hook is attached, and the (e.g. substantial) surface area of the longitudinal backplate of the fixing device contacts the other side of the wall. When secured together with a fastener, the fastener may be tightened to increase the pressure and thus the friction of the rear face of the hook and the longitudinal backplate of the fixing device against the sides of the wall which, along with the plug portion of the fixing device in the hole in the wall, allows (in at least preferred embodiments) a substantially increased load to be hung from the hook.

Such a fixing device may be installed in any suitable and desired way. In a preferred embodiment the fixing device is inserted from the front face of the suspended plasterboard wall and then the plug portion pulled or screwed back into the hole to secure it in place, e.g. using a tool attached to the aperture in the plug portion of the fixing device. Thus in a particularly preferred embodiment the fixing device, for attaching a hook to a suspended plasterboard wall, comprises:
a plug portion for securing in a hole in the suspended plasterboard wall, the plug portion comprising an aperture for receiving a fastener that extends in a first direction;
a longitudinal backplate that extends in a second direction and is attached to and projects from diametrically opposite sides of the plug portion, wherein the backplate is arranged in use to engage with the rear face of the suspended plasterboard wall when the plug portion is secured in the hole;
wherein the perimeter of the cross section of the plug portion in a plane perpendicular to the first direction has a minimum bounding circle having a first diameter; and
wherein the perimeter of the cross section of the fixing device through the plug portion in a plane perpendicular to the second direction has a minimum bounding circle having a second diameter less than or equal to the first diameter.

In another preferred embodiment the fixing device, for attaching a hook to a suspended plasterboard wall, the fixing device comprises:
a plug portion for securing in a hole in the suspended plasterboard wall, the plug portion comprising an aperture for receiving a fastener that extends in a first direction;
a longitudinal backplate that extends in a second direction and is attached to and projects from diametrically opposite sides of the plug portion, wherein the backplate is arranged in use to engage with the rear face of the suspended plasterboard wall when the plug portion is secured in the hole;
wherein the perimeter of the cross section of the plug portion in a plane perpendicular to the first direction has a minimum bounding circle; and
wherein the fixing device is capable of being pushed along the length of the longitudinal backplate in a second direction through a hole in a suspended plasterboard wall having a cross section substantially equal to the minimum bounding circle.

The method of installing such a fixing device and then attaching a hook in accordance with the present invention thereto is considered to be novel and inventive in its own right. Thus viewed from a further aspect the invention provides a method as claimed in claim 12.

Preferably the method also comprises inserting the raised portion of the hook into the hole from the front face of the suspended plasterboard wall, i.e. before the fastener is inserted.

Preferably the plug portion is arranged to receive a tool to position the plug portion relative to the hole in the suspended plasterboard wall to allow the aperture in the plug portion to receive a fastener. Preferably the plug portion is arranged to receive a tool for securing the plug portion in the hole in the suspended plasterboard wall. Preferably the plug portion is substantially cylindrical.

Preferably the cross section of the plug portion comprises two straight sides that each extend in a direction substantially parallel to the second direction and two curved sides that extend between the two straight sides (e.g. that together form an outer wall of the plug portion). Preferably the curved sides are angled away from the first direction (in which the aperture extends) towards the aperture (in a direction away from the longitudinal backplate), e.g. by approximately 5 degrees. This rake helps to secure the plug portion in the hole in the suspended plasterboard wall.

Preferably the plug portion comprises a notch (extending in the second direction) in the face of the plug portion (distal from the longitudinal backplate) arranged to accommodate the tool, e.g. such that the tool does not project from (e.g. lies flush with) the face of the plug portion when the tool is attached to the plug portion and oriented (relative to the plug portion) in the second direction. Preferably the plug portion, e.g. the entrance opening thereof, comprises a rim extending around the face of the plug portion (distal from the longitudinal backplate) at least partially surrounding the entrance (e.g. opening) to the aperture. When the plug portion comprises a rim, preferably the notch extends through the rim.

The notch may have any suitable and desired shape. In one embodiment the notch is cylindrical (having a constant cross section extending in the second direction). The notch may have a rectangular cross section or may have an increasing width (in a direction perpendicular to the first and second directions) away from the longitudinal backplate (in the first direction), e.g. such that the notch has a trapezoid or triangular (V-shaped) cross section.

Preferably the notch comprises a central pillar, e.g. such that the notch is in fact two notches in the plug portion separated by the central pillar. When, for example, the tool comprises a sprung wire tool, e.g. arranged in a loop, the two notches either side of the central pillar are then arranged to accommodate each end of the tool. The central pillar helps to strengthen the plug portion and to exert additional pressure on the hole in the suspended plasterboard wall when the fixing device is installed.

Preferably the cross section of the plug portion comprises corners remote from the longitudinal backplate that are chamfered. Preferably a side of the plug portion comprises corrugations. Preferably the plug portion comprises one or more recesses arranged to receive an end of the tool.

Preferably the aperture in the plug portion extends through the plug portion and through the longitudinal backplate. In one embodiment the aperture in the plug portion comprises a thread. In one embodiment the aperture is arranged to receive a self-tapping fastener, e.g. the aperture may be straight sided, i.e. may not be threaded. Preferably the aperture in the plug portion comprises an opening having a cross section that is greater than the cross section of the rest of the aperture.

In one embodiment the outer wall (e.g. one or more of the (e.g. one or both of the two curved) sides) of the plug portion comprises a screw thread. Such an external screw thread helps to secure the plug portion in the hole in the plasterboard. This is achieved by screwing the plug portion into the hole in the plasterboard to position the plug portion in the hole in the plasterboard. Thus preferably the step of using the tool to position the plug portion relative to the hole to allow the aperture to receive a fastener, in the method of installing the fixing device, comprises using (e.g. rotating) the tool to screw the plug portion into the hole in the plasterboard, e.g. until the longitudinal backplate engages with (e.g. lies flat against) the rear face of the plasterboard. (It should be noted that when considering the minimum bounding circle of the plug portion, this does not include the screw thread that projects from the outer wall of the plug portion, because this will bite into the hole in the plasterboard and thus not be the surface (i.e. the outer wall of the plug portion) that lies against the edges of the hole.)

Preferably the screw thread on the outer wall of the plug portion has a handedness that is opposite to the handedness of the fastener that is to be secured in the aperture of the fixing device. Thus when the aperture of the fixing device is threaded, preferably the screw thread on the outer wall of the plug portion has a handedness that is opposite to the handedness of the screw thread of the threaded aperture.

The screw thread on the outer wall of the plug portion may have any suitable and desired pitch (thread angle). In a preferred embodiment the screw thread has a pitch of between 10 degrees and 20 degrees, e.g. (approximately) 15 degrees.

The screw thread on the outer wall of the plug portion may have any suitable and desired number of threads. In a preferred embodiment the screw thread comprises a plurality of (e.g. four) independent (e.g. non-overlapping) threads.

The one or more threads of the screw thread on the outer wall of the plug portion may have any suitable and desired size and shape. In a preferred embodiment the one or more threads (each) have a height of between 1 mm and 1.4 mm (e.g. (approximately) 1.2 mm) in a direction projecting from (i.e. perpendicular to) the outer wall of the plug portion. In a preferred embodiment the one or more threads (each) have a base width of between 0.6 mm and 1 mm (e.g. (approximately) 0.8 mm). In a preferred embodiment the one or more threads (each) have a substantially triangular cross-sectional profile (i.e. in a plane perpendicular to the direction in which the one or more threads extend), preferably with a rounded apex.

The one or more threads of the screw thread on the outer wall of the plug portion may extend all the way from the longitudinal backplate to the front face of the plug portion. In a preferred embodiment the one or more threads of the screw thread on the outer wall of the plug portion are (e.g. each) spaced from the longitudinal backplate (e.g. by approximately 2 mm) and/or from the front face of the plug portion (e.g. by approximately 1.5 mm).

In one embodiment the longitudinal backplate comprises one or more apertures, e.g. slots, extending through the longitudinal backplate in the first direction, i.e. parallel to the aperture through the plug portion, wherein each aperture in the longitudinal backplate is arranged to receive a fastener for attaching an item to the fixing device. These additional apertures allow items (e.g. kitchen cupboards) that require two or more fasteners to be used, e.g. in a bracket, to attach an item to a wall. The fixing device may comprise only one aperture in the longitudinal backplate on one side of the plug portion or the fixing device may comprise two (or more) apertures, e.g. one positioned in the longitudinal backplate on each side of the plug portion.

The provision of additional apertures in the longitudinal backplate has been found to increase the load bearing ability of the fixing device considerably when two or more fasteners are used to attach an item to the fixing device. This is because in this configuration the longitudinal backplate is secured at two or more positions, so it sandwiches the suspended plasterboard wall between the (e.g. bracket for attaching the) item and the longitudinal backplate, which makes it even more difficult to deform the fixing device owing to the additional support from the extra fastening point.

When the one or more apertures comprise one or more slots, preferably the slots (in addition to their depth in the first direction through the longitudinal backplate) each have a length (e.g. of approximately 1 cm) that extends in the second direction. This allows for the fixing device to be used for a number of different fastener separations, e.g. between 15 mm and 25 mm apart. Preferably the slot (or each of the slots) has a width (in a direction perpendicular to both the first and second directions) of approximately 3 mm.

Preferably the one or more apertures (e.g. slots) are not threaded but instead are arranged to receive self-tapping or self-drilling screws. This helps to reduce the cost of manufacturing the fixing device and allows for the position that the screw is inserted into the aperture to be varied, thus allowing one type of fastener to be used for a variety of different bracket types (e.g. having differing hole separations). Allowing self-tapping or self-drilling screws to be used also helps to avoid the potential difficulty of aligning a second fastener being passed through a hole in the bracket with the corresponding (hidden) aperture in the longitudinal backplate.

Preferably the longitudinal backplate comprises a longitudinally extended cylinder. Preferably the cross section of the longitudinal backplate comprises chamfered corners opposite to the side from which the plug portion projects. In one embodiment the side of the longitudinal backplate opposite to the side from which the plug portion projects is rounded, e.g. forms an arc of a circle. Preferably the longitudinal backplate comprises one or more barbs that project from the longitudinal backplate.

In a preferred embodiment one or both of the ends of the longitudinal backplate (distal from the plug portion) are rounded, e.g. on the side of the longitudinal backplate from which the plug portion projects.

Preferably the fixing device is made from integrally moulded plastic. In one embodiment the fixing device comprises glass fill, e.g. in the plastic. In a particularly preferred embodiment the fixing device is made of nylon (e.g. polyamide 66 or polyphthalamide (PPA)) with glass fill. The fixing device may comprise any suitable and desired fraction of glass fill. In one embodiment the material of the fixing device comprises between 25% and 65% glass fill, e.g. 50% glass fill.

In one embodiment the fixing device comprises an integrated vapour barrier. Preferably the integrated vapour barrier comprises a segment of a circle arranged in a plane perpendicular to the first direction on each side of the plug portion that is perpendicular to the second direction (i.e. the two sides of the plug portion from which the longitudinal backplate does not extend). Preferably the circle has the same radius of curvature as the radius of the curved sides of the plug portion. Preferably the circle has the same radius of curvature as the radius of curvature of the hole, e.g. 20 mm.

Preferably the segments of the circle of the vapour barrier and the curved sides of the plug portion together form a circle, e.g. the minimum bounding circle of the plug portion. Preferably the vapour barrier lies in a plane that passes through the centre of the minimum bounding circle of the perimeter of the cross section of the fixing device through the plug portion in a plane perpendicular to the second direction.

The fixing device and the hook may be supplied separately. In one embodiment, however, the fixing device and the hook are supplied together as a kit. Thus when viewed from a further aspect the invention provides a kit as claimed in claim 6. In a preferred embodiment the kit (according to any aspect of the present invention) also comprises a length of (e.g. picture) wire for use in attaching an item to the hook via the groove in the arc shaped edge of the hook. In a preferred embodiment the kit (according to any aspect of the present invention) also comprises a tool for installing the fixing device in a hole in a suspended plasterboard wall, wherein the tool is arranged to be received by the plug portion of the fixing device.

In one embodiment the tool comprises a sprung wire tool comprising an end having one or more projections arranged to be received by one or more recesses in the plug portion.

In a preferred embodiment the plug portion comprises (e.g. only) a single recess (e.g. hole) arranged to receive an end of the tool, e.g. the end of the tool is arranged to be inserted into the recess. Preferably the recess is cylindrical. Preferably the recess has a circular cross section. Preferably the end of the tool has a shape that is complementary to the recess. Thus preferably the end of the tool (e.g. the end engaging portion of the tool, as described below) is cylindrical. Preferably the end of the tool has a circular cross section. Preferably the end of the tool has a rounded, bevelled or mitred (e.g. at 45 degrees) tip.

In one embodiment the tool is made of plastic, e.g. acetal or nylon. In one embodiment the tool comprises glass fill, e.g. in the plastic. In a preferred embodiment the tool is made of nylon (e.g. polyamide 66 or polyphthalamide (PPA)) with glass fill. The tool may comprise any suitable and desired fraction of glass fill. In one embodiment the material (e.g. plastic) of the tool comprises between 25% and 65% glass fill, e.g. 50% glass fill. Preferably the tool is integrally moulded.

Preferably the tool comprises a handle and an end engaging portion, wherein the end engaging portion is bent relative (e.g. perpendicular) to the handle. Thus preferably the end engaging portion of the tool is arranged for inserting into the recess, to attach the tool to the fixing device, and the handle is used to insert the fixing device through the hole in the plasterboard and then to position the plug portion in the hole in the plasterboard.

Preferably the handle comprises an end handling portion that is bent relative (e.g. perpendicular) to a main portion of the handle (e.g. the end engaging portion of the tool and the end handling portion of the handle of the tool lie either side of the main portion of the handle). In a preferred embodiment the end handling portion of the handle and the end engaging portion of the tool lie in the same plane.

Preferably the end handling portion and the main portion of the handle extend substantially perpendicularly to each other. In one embodiment the end handling portion and the main portion of the handle are configured substantially in a "T" shape, e.g. the end handling portion extends in substantially opposite directions perpendicularly from the end of the main portion of the handle.

In a preferred embodiment the tool is made as a single part (e.g. integrally moulded).

In a preferred embodiment the end (e.g. engaging portion) of the tool comprises a flange that extends (e.g. circumferentially) around (e.g. the circumference of) at least part of the end of the tool. Preferably at least part of the distal end of the tool projects from the flange. Thus preferably the flange is located proximal to the main portion of the handle of the tool.

Preferably the flange extends greater than half of (e.g. the circumference of) the end of the tool, e.g. through an angle of greater than 180 degrees, e.g. (approximately) 225 degrees. In a particularly preferred embodiment the flange extends around the (e.g. circumference of the) end of the tool through (e.g. approximately) 225 degrees from a point (e.g. on the circumference) opposite the side to which the (e.g. main portion of the) handle attaches to the end (e.g. engaging portion) of the tool.

Preferably the flange has an edge that extends substantially tangentially outwards from the (e.g. circumference of the) end of the tool at the point (e.g. on the circumference) opposite the side to which the (e.g. main portion of the) handle attaches to the end (e.g. engaging portion) of the tool. Preferably the flange has an edge that extends substantially radially outwards from the (e.g. circumference of the) end of the tool at the point (e.g. approximately) 225 degrees around from the point (e.g. on the circumference) opposite the side to which the (e.g. main portion of the) handle attaches to the end (e.g. engaging portion) of the tool.

For larger items to be hung from a wall, two hooks (e.g. spaced horizontally apart from each other) may conveniently be used. A wire for hanging such an item from the hooks can then be passed around both the hooks. This is considered novel and inventive in its own right and thus when viewed from a further aspect the invention provides a system as claimed in claim 14. The invention also provides a method as claimed in claim 15.

It will be appreciated that the groove extending around the arc shaped edge of each hook spreads out the load of the item (through the wire) on the hooks as the wire can pass around as much of each hook as required. Furthermore, owing to the continuous groove extending around the arc shaped edge of each hook (which in some embodiments is rotationally symmetric), the resultant force on the hook from a wire (attached to an item hanging from the hook) in the groove is radial to the central fastener (assuming a constant tension in the wire). Conventional hooks are unable to do this as the lateral forces on such conventional hooks from load of the item (through the wire) rotates the loop of the hook from the vertical. Such rotation does not occur with the hook of the present invention owing to the extended groove which balances out the load about the, e.g. central, fastener that passes through the aperture in the body portion of the hook. Thus even if the central fastener were to become loose, the hook of the present invention would not rotate as there is no resultant moment applied to the hook.

Thus preferably the kit comprises two hooks and two fixing devices.

Embodiments of the invention will now be described, by way of example only, with reference to the accompanying drawings, in which:
Figure 1 shows a front view of a hook in accordance with an embodiment of the present invention;
Figure 2 shows a rear view of the hook shown in Figure 1;
Figure 3 shows a cross-sectional view of the hook shown in Figures 1 and 2;
Figure 4 shows a front perspective view of the hook shown in Figures 1, 2 and 3;
Figure 5 shows a rear perspective view of the hook shown in Figures 1-4;
Figures 6-8 show different side views of a fixing device for use with the hook shown in Figures 1-5;
Figure 9 shows a cross sectional view of the fixing device shown in Figures 6-8;
Figure 10 shows an end view of the fixing device shown in Figures 6-9 being pushed through a hole;
Figure 11 shows the fixing device shown in Figures 6-10 when the fixing device is installed in a hole using a tool;
Figure 12 shows a cross sectional view of the fixing device shown in Figures 6-11 while the fixing device is being installed in a hole using a tool;
Figure 13 shows a cross sectional view of the fixing device shown in Figures 6-12 once the fixing device has been installed in the hole with the hook shown in Figures 1-5;
Figures 14a-14d show the fixing device of Figures 6-13 being installed in a hole in a suspended plasterboard wall using a tool;
Figure 15 shows how two hooks according to an embodiment of the present invention may be used together in combination.
Figures 16a and 16b show perspective views of a fixing device according to another embodiment of the invention; and
Figures 17a and 17b show a tool for use with the fixing device as shown in Figures 16a and 16b.

A hook is a ubiquitous fixing for hanging an item from a wall. A hook for attaching to a suspended plasterboard (or "stud partition") wall according to an embodiment of the present invention will now be described. Suspended plasterboard walls constructed from plasterboard attached to a timber frame require different fixing devices to attach items (e.g. hooks) to them compared to solid walls. This is because the fixing is attached solely to the plasterboard (unless the very restricted positions of the timber frame are used to screw into) and thus cannot rely on, e.g., bricks behind the plasterboard to secure the fixing owing to the void behind the plasterboard. Conventional wall plugs are therefore inadequate in plasterboard as they work loose when pressure is applied to them. A fixing device suitable for attaching a hook to a suspended plasterboard wall will also be described.

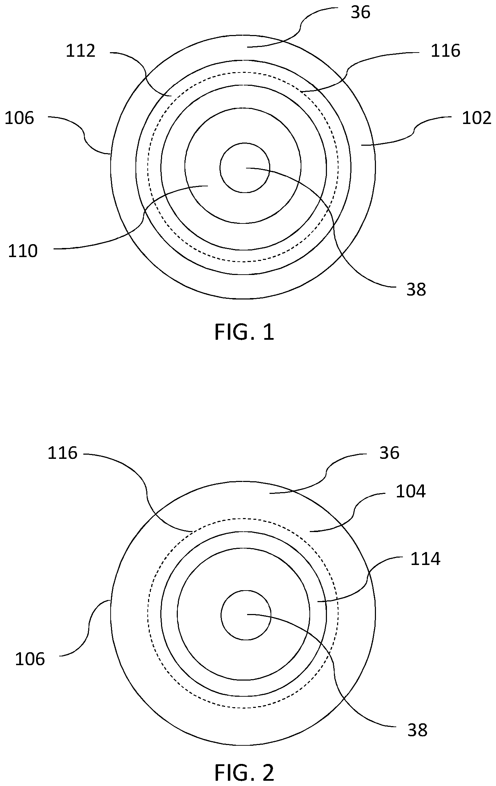

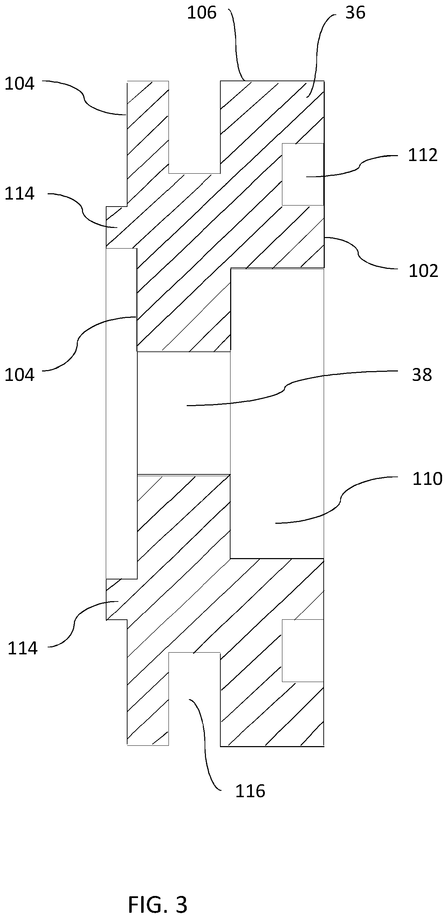

Figures 1-5 show front, rear, cross-sectional, front perspective and rear perspective views respectively of a hook 36, which is integrally moulded from nylon, in accordance with an embodiment of the present invention. The cross-sectional view shown in Figure 3 is in a plane that passes through the centre of the hook 36, perpendicular to the views shown in Figures 1 and 2.

The hook 36 is a squat circular cylinder, with a planar circular front face 102 and a planar circular rear face 104. The front and rear faces 102, 104 each have a diameter of 32 mm. A circular edge 106 having a total thickness of 9.5 mm (measured from the front face 102 to the rear face 104) runs around the side of the cylinder between the front and rear faces 102, 104 (i.e. the edge 106 extending between the circumferences of front and rear faces 102, 104 and thus extending around the circumference of the hook 36). A circular cylindrical aperture 38 of diameter 6 mm for receiving an M6 bolt passes through the hook 36 from the front face 102 to the rear face 104.

A recess 110 of diameter 14 mm surrounds the entrance to the aperture 38 in the front face 102 to accommodate the head of an M6 bolt. A circular groove 112 (the internal position of which is shown in dotted lines in Figures 1 and 2) of depth 2 mm and width 3 mm is formed in the front face 102 of the hook 36.

On the rear face 104 of the hook 36, a circular wall 114 of height 1 mm (from the rear face 104 outside the circular wall 114, 1.5 mm from the rear face 104 inside the circular wall), width 2 mm and external diameter 20 mm is formed. The portion of the rear face 104 within the wall 114 is recessed by 0.5 mm compared to the portion of the rear face 104 outside the wall 114.

As can be seen in Figures 3-5, and shown in dotted outline in Figures 1 and 2, a groove 116 of depth 4.5 mm and width 2.5 mm is formed in and around the full circumference of the edge 106 of the hook 36. As can be seen from Figure 3, the recess 110 in the front face 102 has a depth and the groove 116 around the edge 106 of the hook 36 is located such that the groove 116 and the recess 110 do not overlap.

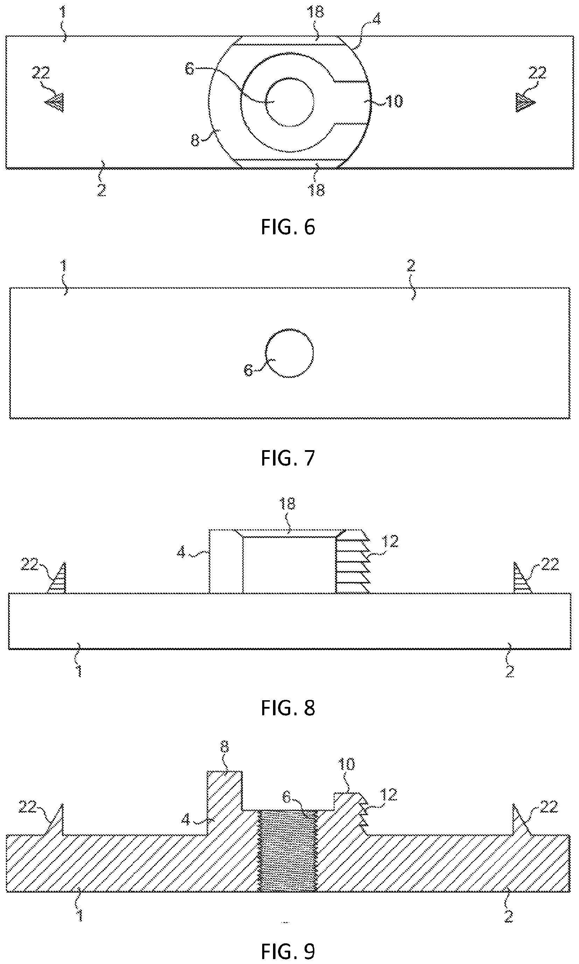

Figures 6-8 show different views of a fixing device 1 according to an embodiment of the present invention: Figures 6 and 7 show the front and back of the fixing device 1 respectively and Figure 8 shows a side view of the fixing device 1. The fixing device 1 has a longitudinal backplate 2 that is substantially cuboid and a plug portion 4 that projects from the longitudinal backplate 2. Figure 9 shows a cross sectional view along the length of the fixing device shown in Figures 6-8.

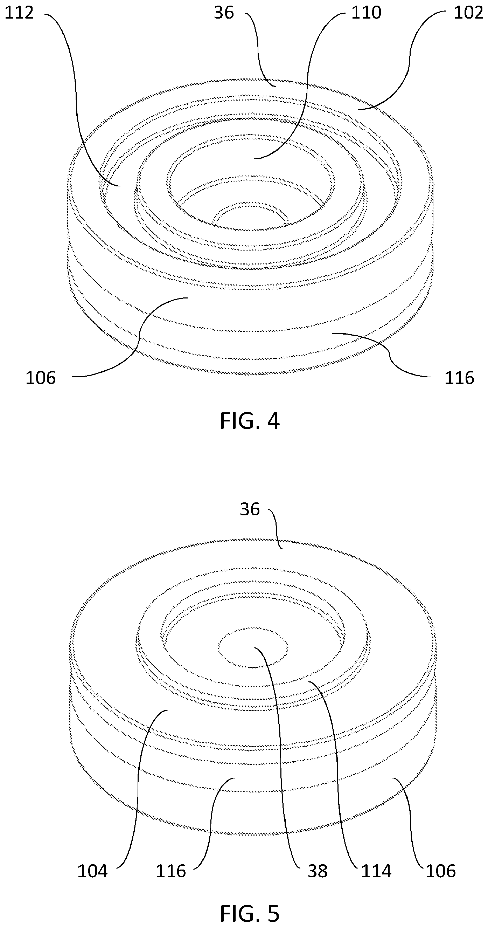

The fixing device 1, which is integrally moulded from nylon, has a threaded aperture 6 that extends in a first direction through the longitudinal backplate 2 and the centre of the plug portion 4. This can be seen from the cross sectional view in Figure 4 which shows the cross section in a plane through and parallel to the aperture 6 along the length of the longitudinal backplate 2. The plug portion 4 is substantially cylindrical having a cross section (in a plane perpendicular to the first direction) that is circular (centred on the aperture 6) but with two flat opposite sides that are collinear with the edges of the longitudinal backplate 2.

The plug portion 4 has a rim 8 around the entrance to the aperture 6, which creates an opening to the aperture 6 that is shaped to accommodate the tool that is used to install the fixing device 1 in a suspended plasterboard wall, as will be explained below. The rim 8 has a radially extending notch 10 therethrough which again is shaped to accommodate the tool. The rounded side of the plug portion 4 through which the notch 10 extends has corrugations 12 that extend circumferentially round the outside of the plug portion 4. The corrugations are angled towards the longitudinal backplate 2.

The plug portion 4 has a maximum diameter of 20 mm and projects by a maximum of 8 mm from the front face of the longitudinal backplate 2. The aperture has a diameter of 6 mm, which is suitable for receiving an M6 threaded bolt.

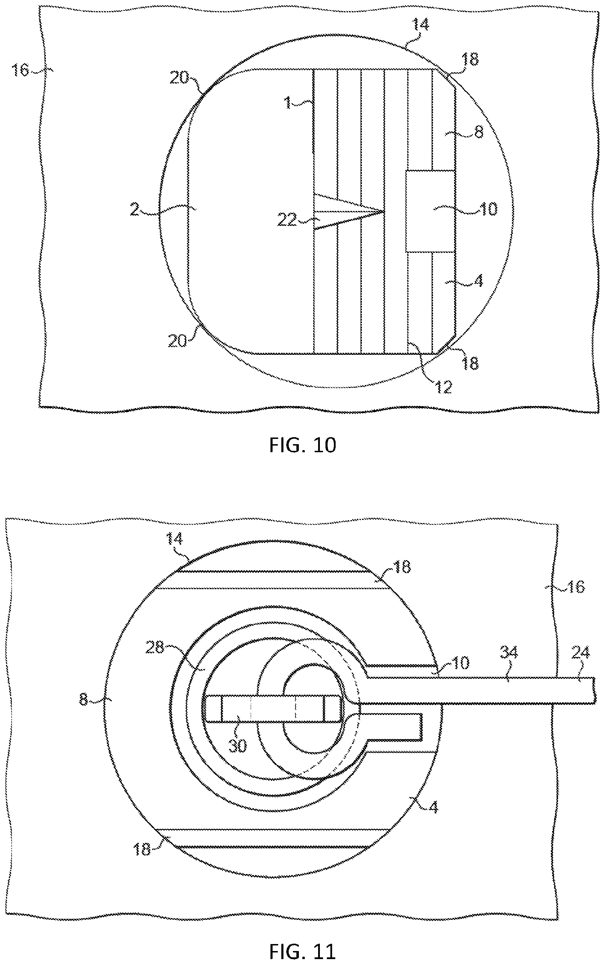

Figure 10 shows an end view of the fixing device shown in Figures 6-9 being pushed through a hole 14 in a suspended plasterboard wall 16. As can be seen from this view, and from those in Figures 6 and 8, the top of the straight edges of the plug portion has a chamfer 18.

The longitudinal backplate 2 has a length of 50 mm (that extends in a second direction, perpendicular to the first direction), a width of 17 mm (that extends perpendicularly to the first direction and to the second direction) that is less than the length and a depth of 8 mm (that extends parallel to the first direction and perpendicularly to the second direction) that is less than the length and the width. In some embodiments, however, the length of the longitudinal backplate 2 may be up to 75 mm. The fixing device of this embodiment is thus suitable for use with suspended plasterboard walls that have a void of 100 mm (or greater) behind the rear face of the suspended plasterboard wall. As can be seen from Figure 10, the rear side of the longitudinal backplate 2 (opposite the front side to which the plug portion 4 attaches) has rounded corners 20 along its length.

Two barbs 22 are positioned towards each end of the front face of the longitudinal backplate 2. The barbs 22 project outwards from the front face and are shaped with a right angle to the front face of the longitudinal backplate 2 on their inside (closest to the plug portion 4) and at an obtuse angle from the front face of the longitudinal backplate 2 on their outside (furthest from the plug portion 4). The barbs 22 have grooves that run around their perimeter.

Figure 11 shows the fixing device 1 shown in Figures 6-10 when the fixing device 1 is installed in a hole 14 in a suspended plasterboard wall 16 using a tool 24. It can be seen from Figures 10 and 11 that the components of the fixing device 1 are shaped and sized such that the minimum bounding circle around the perimeter of the plug portion 4 is the size of the smallest circular hole 14 (i.e. having a diameter of 20 mm) into which the plug portion 4 may be secured and through which the fixing device (with the tool 24 attached) may be pushed along the length of its longitudinal backplate 2 (i.e. parallel to the second direction.

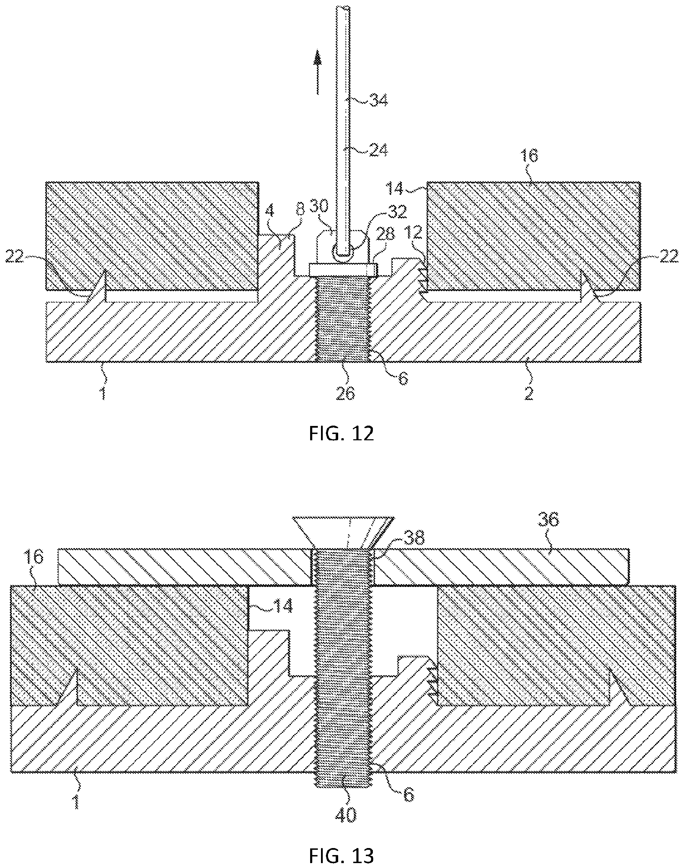

The tool 24 used to install the fixing device 1 shown in Figures 6-11 can be seen in Figure 11 and Figure 12. Figure 12 shows a cross sectional view of the fixing device 1 shown in Figures 6-11 while the fixing device 1 is being installed in a hole 14 in a suspended plasterboard wall 16 using the tool 24. The tool 24 has a screw thread 26, a flange 28 and tab 30 having a hole 32 therethrough to which is attached a wire handle 34. The flange 28 limits the distance into the threaded aperture 6 that the screw thread 26 can be screwed, such that tab 30 aligns with the notch 10 through the rim 8 of the plug portion 4 and so that the end of the screw thread 26 lies flush with the rear face of the longitudinal backplate 2.

The wire handle 34 is able to rotate in the hole 32 of the tab 30 so that when the screw thread 26 is screwed into the threaded aperture 6 the wire handle 34 is accommodated in the notch 10 (as shown in Figure 11).

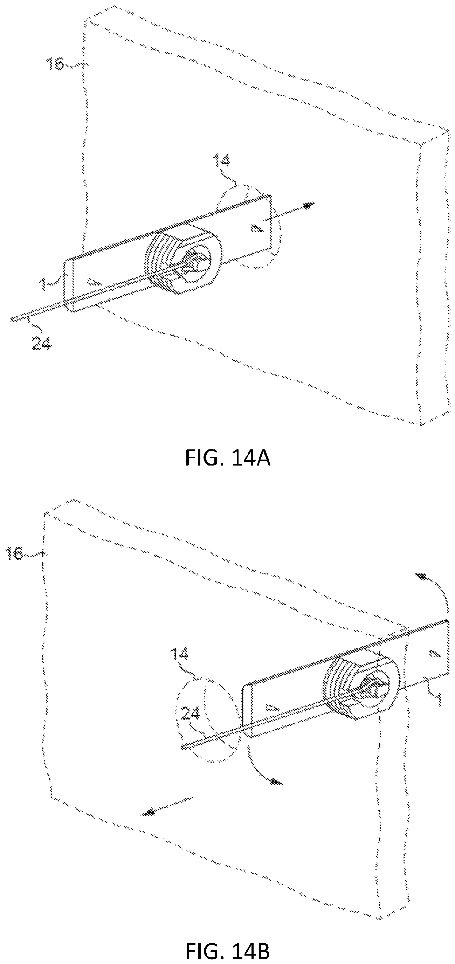

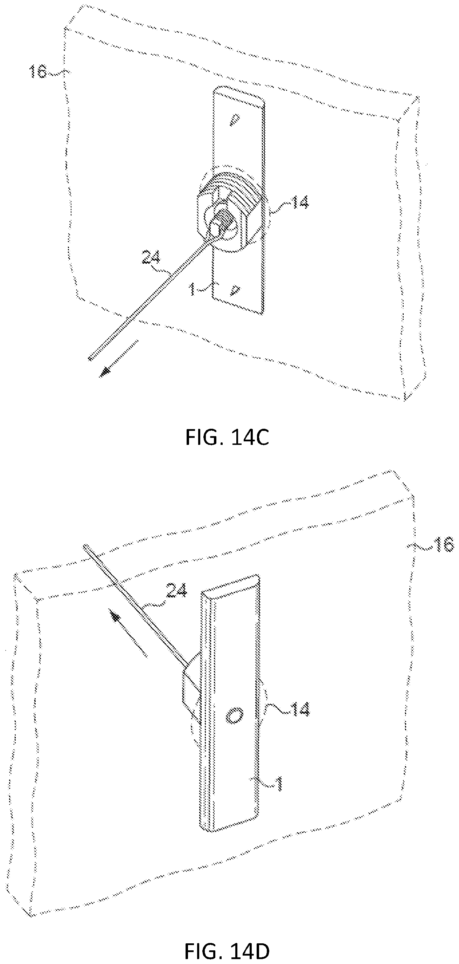

Figure 13 shows a cross sectional view of the fixing device 1 shown in Figures 6-12 once the fixing device 1 has been installed in the hole 14 and the hook 36 has been attached to the fixing device 1 through the hole 14. Figures 14a-14d show the fixing device 1 of Figures 6-13 being installed in a hole 14 in a suspended plasterboard wall 16 using the tool 24.

Installation of the fixing device 1 in a hole 14 in a suspended plasterboard wall 16 using the tool 24 will now be described with reference to Figures 6-13 and 14a-14d.

First a hole 14 having a diameter of 20 mm is drilled all the way through a suspended plasterboard wall 16 to which a hook (e.g. as shown in Figures 1-5) is to be attached. The screw thread 26 of the tool 24 is screwed into the threaded aperture 6 of the plug portion 4 of the fixing device 1 until the flange 28 of the tool 24 contacts the top of the threaded aperture 6. At this point the end of the screw thread 26 is flush with the rear face of the longitudinal backplate 2, and the tab 30 and handle 34 of the tool 24 are aligned with the notch 10 through the rim 8 of the plug portion 4 such that the handle 34 can be rotated and located in the notch 10.

The fixing device 1 is oriented with respect to the hole 14 such that the second direction is perpendicular to the suspended plasterboard wall 16 (as shown in Figure 14a). The fixing device 1 is then inserted into and pushed fully through the hole 14 (as shown in Figure 10, which omits the tool 24 for the purposes of clarity) so that the fixing device 1 is pushed into the void behind the rear face of the suspended plasterboard wall 16 (as shown in Figure 14b). At all times, the handle 34 of the tool 24 is retained so that fixing device 1 is not lost into the void behind the suspended plasterboard wall 16.

The handle 34 of the tool 24 is then used to rotate the fixing device 1 such that the front face of the longitudinal backplate 2 lies in a plane parallel to the plane of the rear face of the suspended plasterboard wall 16. The tool 24 is used to rotate the fixing device 1 so that the second direction lies vertically, with the corrugations 12 lying on the upper side of the plug portion 4.

With the fixing device 1 in this position, the tool 24 is used to pull the plug portion 4 back into the hole 14 (as shown in Figures 11, 12, 14c and 14d) so that the barbs 22 embed in the rear face of the suspended plasterboard wall 16 and the front face of the longitudinal backplate 2 lies against the rear face of the suspended plasterboard wall 16 (in the position shown in Figure 13). In this position the plug portion 4 is secured in the hole 14.

The tool 24 is then removed by unscrewing the screw thread 26 from the threaded aperture 26. The hook 36 (as shown in Figures 1-5) can then be attached to the fixing device 1 (and thus to the suspended plasterboard wall 16) by first inserting the circular wall 114 of the hook 36 into the hole 14 in the suspended plasterboard wall 16 so that the outer perimeter of the circular wall 114 engages with the sides of the hole 14 in the suspended plasterboard wall 16. The hook 36 is then secured to the suspended plasterboard wall 16 by passing an M6 bolt 40 through the aperture 38 in the front face 104 of the hook 36 and into the threaded aperture 6 of the fixing device 1. The bolt 40 is then tightened until the head of the bolt 40 engages with the recess 110 of the hook 36 to secure the hook 36 to the suspended plasterboard wall 16.

In the case that the hook 36 is desired to be removed from the suspended plasterboard wall 16 and the fixing device 1 reused, the installation method described above may simply be reversed.

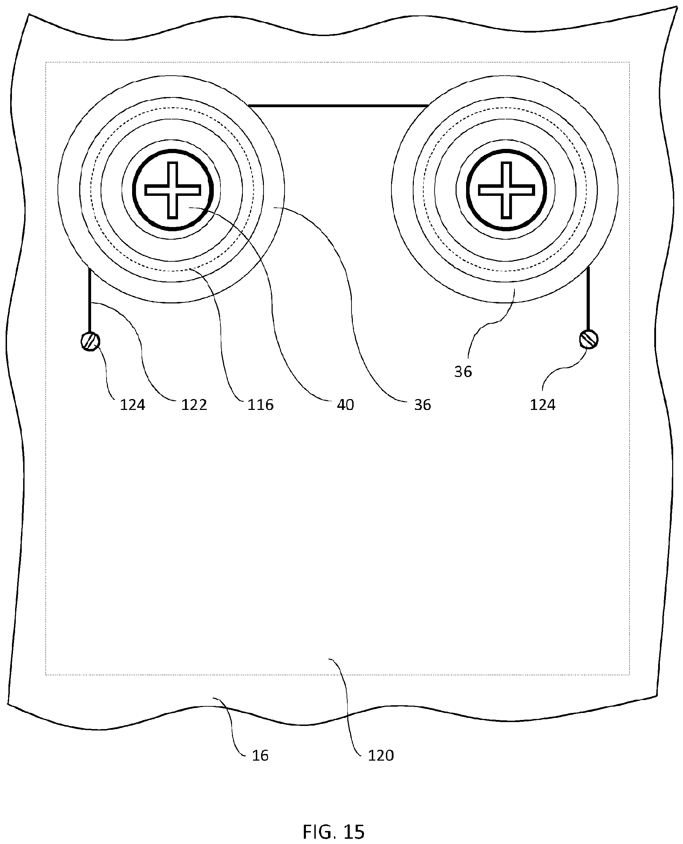

Figure 15 shows how two hooks 36 according to an embodiment of the present invention may be used together to hang an item 120, e.g. a framed picture.

The hooks 36 in the arrangement shown in Figure 15 are spaced horizontally from each other on a suspended plasterboard wall 16. Each hook 36 is attached to the wall 16 in the manner described above, i.e. using a fixing device 1 and a bolt 40. Once the hooks 36 have been attached to the wall 16, a wire 122 (to which the item 120 to be hung is attached by a pair of fixing points 124) is inserted into and extended between the grooves 116 of the respective hooks 36 to hang the item 120 from the wall 16.

The fixing points 124 on the item 120 are positioned such that the ends of the wire 122 fall vertically after passing around the grooves 116 of the respective hooks 36. The Applicant has found this to be a particularly beneficial configuration as it minimises the tension in the wire. However, this configuration may not always be possible or practical, and thus for other items the fixing points may be positioned such that the ends of the wire diverge or converge, as is required.

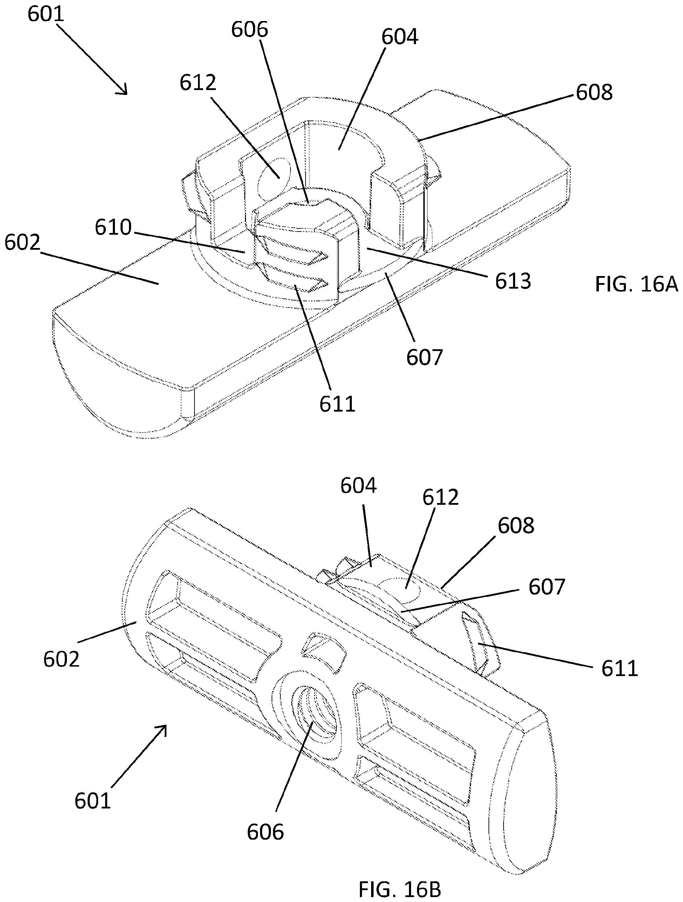

Figures 16a and 16b show perspective views of a fixing device 601 according to another embodiment of the present invention. This embodiment of the fixing device 601 shares a number of common features with the embodiments shown in Figures 6-14, but has a number of key differences. The fixing device 601 has a longitudinal backplate 602 that is substantially flat on a side from which a plug portion 604 projects and is curved on its opposite side. The ends of the longitudinal backplate 602 are also rounded.

The fixing device 601, which is integrally moulded from nylon having 50% glass fill, has a threaded aperture 606 that extends in a first direction through the longitudinal backplate 602 and the centre of the plug portion 604. The plug portion 604 is substantially cylindrical having a cross section (in a plane perpendicular to the first direction) that is circular (centred on the aperture 606) but with two flat opposite sides that are collinear with the edges of the longitudinal backplate 602. Two segments of a circle project perpendicularly from each of the flat sides of the plug portion 604 form an integral vapour barrier 607.

The plug portion 604 has a rim 608 around the entrance to the aperture 606, which creates an opening to the aperture 606 that is shaped to accommodate the tool that is used to install the fixing device 601 in a suspended plasterboard wall or ceiling, as will be explained below. On one of the flat sides of the plug portion 604, the rim 608 has a circular recess 612 that extends through the rim 608 in a direction both perpendicular to the first direction and the second direction (in which the longitudinal backplate 562 extends). The circular recess 612 is shaped to receive the end of the tool that is used to install the fixing device 601. On the opposite side of the plug portion 604, the rim 608 has a slot 613 that extends through the rim 608. This slot 613 provides access for the end of the tool to be inserted into the circular recess 612. The rim 608 also has a radially extending notch 610 therethrough which again is shaped to accommodate the tool. The base of the notch 610 sits above the base of the opening to the aperture 606.

The two rounded sides of the plug portion 604 each have an external screw thread 611 (having one shorter portion and one longer portion on each side) projecting therefrom. The longer portion of the screw thread 611 on the rounded side of the plug portion 604 through which the notch 610 extends is interrupted by the notch 610. The screw threads 611 are left handed.

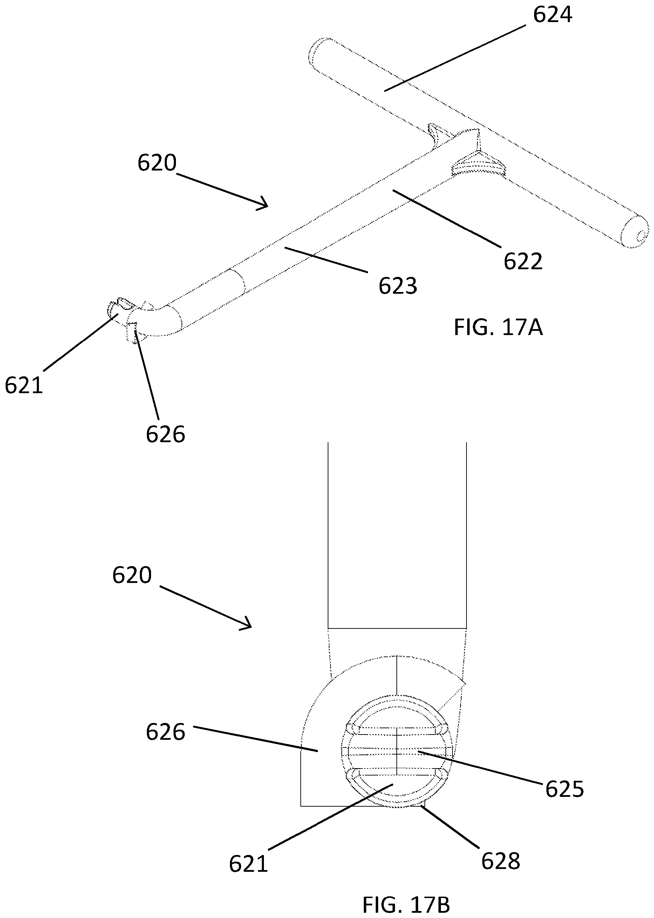

A tool 620 for use with the fixing device 601 shown in Figures 16a and 16b is shown in Figures 17a and 17b. The tool 620, shown in perspective in Figure 17a, is integrally moulded from nylon having 50% glass fill. The tool 620 has an end engaging portion 621 and a handle 622. The handle 622 has a main portion 623 and an end handling portion 624. The shaft of the main portion 623 of the handle 622 has a diameter of 6 mm at its end that connects to the end handling portion 624 and is graded to a diameter of 5 mm at a point 20 mm from the end of the main portion 623, i.e. so that this portion of the handle 622 fits through the notch 610 in the fixing device 601. The end handling portion 624 has a diameter of 6 mm and projects perpendicularly from either side of the end of the main portion 623 of the handle 622.

Figure 17b shows the end engaging portion 621 of the tool 620 in more detail. The end engaging portion 621 of the tool 620 is bent perpendicularly to the main portion 623 of the handle 622 but lies in the same plane as the main portion 623 and the end handling portion 624 of the handle 622. The distal end of the end engaging portion 621 has a slot 625 across its diameter having a width of 1.2 mm and depth of 4 mm. The end engaging portion 621 also has a flange 626 that extends circumferentially around the circumference of the end engaging portion 621 through an angle of 225 degrees from the bottom end of the tool 620. The flange 626 is spaced from the distal end of the end engaging portion 621 and extends tangentially from the bottom end of the tool 620 and radially from the other end of the flange 626. The end engaging portion 621 of the tool 620 has a diameter of 4 mm at its intersection with the flange 626, increasing gradually to a diameter of 4.2 mm at the start of the bevel at its distal end.

The end engaging portion 621 also has a projection 628, positioned the other side of the bottom end of the tool 620 from the flange 626 (which can be thought of as an extension of the flange 626), which extends diagonally through the width of the flange 626.

Installation of the fixing device 601 of Figures 16a and 16b using the tool 620 shown in Figures 17a and 17b is similar to the embodiments described previously.

First, the end engaging portion 621 of the tool 620 is inserted into the recess 612 (which has a diameter of 4 mm at the inside of the rim 608 and a diameter of 4.14 mm at the outside of the rim 608) in the fixing device 621, with the end engaging portion 621 pushed up until the flange 626 prevents it from being pushed any further into the recess 612. The slot 625 in the distal end of the end engaging portion 621 allows the end engaging portion 621 to be compressed slightly when it inserted into the recess 612, with the diameter of the recess 612 increasing slightly towards the edge of the rim 608 of the plug portion 604 of the fixing device 601 such that the end engaging portion 621 can expand slightly to help to retain the tool 601 attached to the fixing device 601.

The main portion 623 of the handle 622 of the tool 620 is inserted into the notch 610 in the rim 608 of the plug portion 604 of the fixing device 601, such that the tool 620 can be used to push the fixing device 601 through a hole in a plasterboard wall and into the void behind it. When the fixing device 601 is fully in the void, the tool 620 is used to pull the fixing device 601 back towards the plasterboard, such that the longitudinal backplate 602 of the fixing device 601 engages with the rear face of the plasterboard wall. This acts to rotate the fixing device 601 about the end engaging portion 621 of the tool 620 in the recess 612 of the fixing device. The fixing device 601 is rotated until the base of the plug portion 604 is rotated past the projection 628 of the end engaging portion 621 of the tool 620 such that the fixing device 601 "snaps" into position, with the edge of the flange 626 that projects tangentially from the end engaging portion 621 of the tool 620 coming into contact with the base of the plug portion 604 so that any further rotation of the fixing device is prevented. The projection 628 also prevents the fixing device 601 from rotating back in the opposite direction.

In this "locked" position, in which the main portion 623 of the handle 622 of the tool 620 is perpendicular to the direction in which the backplate 602 of the fixing device 601 extends and collinear with the aperture 606 in the plug portion 604, the tool 620 can be used to pull the fixing device 601 towards the hole to engage the four ends of the screw threads 611 with the rear face of the plasterboard. The tool 620 is then rotated (about the central aperture 606 of the fixing device and the main portion 623 of the handle 622 of the tool 620) to screw the plug portion 604 of the fixing device 601 into the hole in the plasterboard.

The pitch of the screw threads 611 is such that the fixing device 601 is rotated through until the flat face of the longitudinal backplate 602 comes into contact with the rear face of the plasterboard, at which point the fixing device 601 is positioned with the longitudinal backplate 602 extending vertically.

As described above, a hook may then be attached to the fixing device 601 using a suitable fastener.

It will be seen from the above that in at least preferred embodiments, the hook of the present invention provides a number of advantages over conventional hooks. First, the raised portion on the rear face of the body portion of the hook has a greater length perimeter than the aperture which the raised portion surrounds. This increased surface area in contact with the hole in the wall enables the hook of the present invention, at least in preferred embodiments, to be able to support the load of a heavier item.

Second, the extended groove formed in the arc shaped edge of the body portion of the hook has a greater length along which a wire is supported. Thus, for the hook of the present invention, the wire used to hang an item from the hook may be subject to reduced stresses, again enabling the hook to be able to support the load of a heavier item.

Third, when two hooks are used in combination, the groove extending around the arc shaped edge of each hook means that the resultant force on the hook from a wire in the groove is generally radial to the central fastener. This helps to prevent rotation of the hook such that even if the central fastener were to become loose, the hook of the present invention would not rotate as there is no resultant moment applied to the hook.

## Claims

1. A hook (36) for attaching to a hole in a wall for hanging an item on the wall, the hook comprising:
a body portion comprising a front face (102), a rear face (104) for abutting the wall and an arc shaped edge (106) between at least part of the perimeter of the front face and least part of the perimeter of the rear face;
a groove (116) formed in, and extending around, the arc shaped edge for receiving a wire for attaching to an item to be hung from the hook;
a raised portion (114) projecting from the rear face of the body portion for locating the hook in the hole in the wall; and
an aperture (38) extending from the front face to the rear face through the body portion for receiving a fastener for attaching the hook to the hole in the wall, wherein the edge of the raised portion surrounds the aperture extending through the body portion.

2. The hook as claimed in claim 1, wherein the body portion comprises a cylinder.

3. The hook as claimed in claim 1 or 2, wherein the dimension of the arc shaped edge in the direction in which the edge extends is greater than the dimension of the edge in a perpendicular direction.

4. The hook as claimed in any one of the preceding claims, wherein the raised portion comprises a wall, and/or wherein the raised portion has a circular perimeter, optionally wherein the raised portion is coaxial with the aperture through the body portion.

5. The hook as claimed in any one of the preceding claims, wherein the front face of the body portion comprises a recess (110) for receiving a head of a fastener.

6. A kit comprising the hook (36) as claimed in any one of the preceding claims and a fixing device (1) for attaching the hook to the hole in the wall, the fixing device comprising a plug portion (4) for securing in a hole in a wall, wherein the plug portion comprises an aperture (6) for receiving a fastener, wherein the kit further comprises a fastener (40) arranged to be inserted through the aperture in the hook and received by the plug portion of the fixing device, optionally wherein the fixing device comprises a longitudinal backplate (2) that projects from diametrically opposite sides of the plug portion, wherein the backplate is arranged in use to engage with the rear face of a suspended plasterboard wall (16) when the plug portion is secured in a hole (14) in the suspended plasterboard wall, optionally wherein the longitudinal backplate comprises one or more apertures extending through the longitudinal backplate in the first direction, wherein each aperture in the longitudinal backplate is arranged to receive a fastener for attaching an item to the fixing device.

7. The kit as claimed in claim 6, wherein the fixing device, for attaching a hook (36) to a suspended plasterboard wall (16), comprises:
a plug portion (4) for securing in a hole (14) in the suspended plasterboard wall, the plug portion comprising an aperture (6) for receiving a fastener (40) that extends in a first direction;
a longitudinal backplate (2) that extends in a second direction and is attached to and projects from diametrically opposite sides of the plug portion, wherein the backplate is arranged in use to engage with the rear face of the suspended plasterboard wall when the plug portion is secured in the hole;
wherein the perimeter of the cross section of the plug portion in a plane perpendicular to the first direction has a minimum bounding circle having a first diameter; and
wherein the perimeter of the cross section of the fixing device through the plug portion in a plane perpendicular to the second direction has a minimum bounding circle having a second diameter less than or equal to the first diameter.

8. The kit as claimed in claim 6, wherein the fixing device, for attaching a hook (36) to a suspended plasterboard wall (16), comprises:
a plug portion (4) for securing in a hole (14) in the suspended plasterboard wall, the plug portion comprising an aperture (6) for receiving a fastener (40) that extends in a first direction;
a longitudinal backplate (2) that extends in a second direction and is attached to and projects from diametrically opposite sides of the plug portion, wherein the backplate is arranged in use to engage with the rear face of the suspended plasterboard wall when the plug portion is secured in the hole;
wherein the perimeter of the cross section of the plug portion in a plane perpendicular to the first direction has a minimum bounding circle; and
wherein the fixing device is capable of being pushed along the length of the longitudinal backplate in a second direction through a hole in a suspended plasterboard wall having a cross section substantially equal to the minimum bounding circle.

9. The kit as claimed in any one of claims 6 to 8, the kit further comprising a tool (24) for installing the fixing device in a hole in a suspended plasterboard wall, wherein the tool is arranged to be received by the plug portion of the fixing device.

10. The kit as claimed in any one of claims 6 to 9, wherein one or more sides of the plug portion (604) comprises a screw thread (611).

11. The kit as claimed in any one of claims 6 to 10, wherein the plug portion of the fixing device comprises a notch (10; 610) in the face of the plug portion arranged to accommodate the tool.

12. A method for attaching a hook (36) to a suspended plasterboard wall (16), the hook as claimed in any one of claims 1 to 5, the method comprising:
installing a fixing device (1) in the suspended plasterboard wall, the fixing device of the kit as claimed in any one of claims 6 to 11, the step of installing the fixing device comprising:
inserting one end of the longitudinal backplate (2) into a hole (14) in a suspended plasterboard wall;
pushing the fixing device fully through the hole and into a void behind the rear face of the suspended plasterboard wall while retaining hold of a tool (24) attached to the plug portion (4); and
using the tool to position the plug portion relative to the hole to allow the aperture (6) to receive a fastener (40);
the method further comprising:
inserting a fastener through the aperture in the hook and attaching the fastener to the aperture in the plug portion to secure the hook to the front face of the suspended plasterboard wall.

13. A kit for attaching a hook (36) to a wall (16) comprising:
a fixing device (601) comprises a plug portion (604) for securing in a hole (14) in a suspended plasterboard wall (16), the plug portion (604) comprising an aperture (606) for receiving a fastener (40) and an outer wall comprising a screw thread (611); and a longitudinal backplate (602) that projects from diametrically opposite sides of the plug portion, wherein the backplate is arranged in use to engage with the rear face of the suspended plasterboard wall when the plug portion is secured in the hole;
a hook (36) for attaching to a hole in a wall for hanging an item on the wall, the hook comprising:
a body portion comprising a front face (102), a rear face (104) for abutting the wall and an arc shaped edge (106) between at least part of the perimeter of the front face and least part of the perimeter of the rear face;
a groove (116) formed in, and extending around, the arc shaped edge for receiving a wire for attaching to an item to be hung from the hook; and
an aperture (38) extending from the front face to the rear face through the body portion for receiving a fastener for attaching the hook to the hole in the wall; and
a fastener (40) arranged to be inserted through the aperture in the hook and received by the plug portion of the fixing device.

14. A system for attaching an item to a wall, the system comprising two hooks each as claimed in any one of claims 1 to 5, wherein the hooks are attached to respective holes in a wall that are spaced substantially horizontally from each other, the system further comprising a wire (122) for hanging the item from the hooks by passing the wire around the grooves of both of the hooks.

15. A method of attaching an item to a wall, the method comprising attaching two hooks to two respective holes in a wall by means of a respective fastener, each hook as claimed in any one of claims 1 to 5, wherein the hooks are attached to respective holes in a wall that are spaced substantially horizontally from each other, the method further comprising passing a wire for hanging the item from the hooks around the grooves formed in the arc shaped edges of both of the hooks.

## Patentansprüche

1. Haken (36) zum Befestigen an einem Loch in einer Wand zum Aufhängen eines Gegenstands an der Wand, wobei der Haken Folgendes umfasst:
einen Körperabschnitt, der eine Vorderfläche (102), eine Rückfläche (104) zum Anliegen an der Wand, und eine bogenförmige Kante (106) zwischen zumindest einem Teil des Umfangs der Vorderfläche und zumindest einem Teil des Umfangs der Rückfläche umfasst;
eine Kerbe (116), die in der bogenförmigen Kante gebildet ist und sich darum erstreckt, um einen Draht zum Befestigen eines Artikels aufzunehmen, der an dem Haken aufgehängt werden soll;
einen erhabenen Abschnitt (114), der von der Rückfläche des Körperabschnitts hervorragt, um den Haken in dem Loch in der Wand zu platzieren; und
eine Öffnung (38), die sich von der Vorderfläche zu der Rückfläche durch den Körperabschnitt erstreckt, um ein Befestigungselement zum Befestigen des Hakens an dem Loch in der Wand aufzunehmen, wobei die Kante des erhabenen Abschnitts die Öffnung umgibt, die sich durch den Körperabschnitt erstreckt.

2. Haken nach Anspruch 1, wobei der Körperabschnitt einen Zylinder umfasst.

3. Haken nach Anspruch 1 oder 2, wobei die Abmessung der bogenförmigen Kante in der Richtung, in der sich die Kante erstreckt, größer als die Abmessung der Kante in einer senkrechten Richtung ist.

4. Haken nach einem der vorstehenden Ansprüche, wobei der erhabene Abschnitt eine Wand umfasst und/oder wobei der erhabene Abschnitt einen kreisförmigen Umfang aufweist, wobei der erhabene Abschnitt optional mit der Öffnung durch den Körperabschnitt koaxial ist.

5. Haken nach einem der vorstehenden Ansprüche, wobei die Vorderfläche des Körperabschnitts eine Vertiefung (110) umfasst, um einen Kopf eines Befestigungselements aufzunehmen.

6. Kit, das den Haken (36) nach einem der vorstehenden Ansprüche und eine Fixiervorrichtung (1) zum Befestigen des Hakens an dem Loch in der Wand umfasst, wobei die Fixiervorrichtung einen Steckerabschnitt (4) umfasst, um in einem Loch in einer Wand gesichert zu werden, wobei der Steckerabschnitt eine Öffnung (6) zum Aufnehmen eines Befestigungselements umfasst, wobei das Kit weiter ein Befestigungselement (40) umfasst, das eingerichtet ist, durch die Öffnung in dem Haken eingesetzt zu werden und von dem Steckerabschnitt der Fixiervorrichtung aufgenommen zu werden, wobei die Fixiervorrichtung optional eine längliche Rückplatte (2) umfasst, die von diametral gegenüberliegenden Seiten des Steckerabschnitts vorragt, wobei die Rückplatte eingerichtet ist, in Verwendung mit der Rückfläche einer abgehängten Gipskartonplattenwand (16) einzugreifen, wenn der Steckerabschnitt in einem Loch (14) in der abgehängten Gipskartonplattenwand gesichert wird, wobei die längliche Rückplatte optional eine oder mehrere Öffnungen umfasst, die sich durch die längliche Rückplatte in der ersten Richtung erstrecken, wobei jede Öffnung in der länglichen Rückplatte eingerichtet ist, ein Befestigungselement zum Befestigen eines Gegenstands an der Fixiervorrichtung aufzunehmen.

7. Kit nach Anspruch 6, wobei die Fixiervorrichtung zum Befestigen eines Hakens (36) an einer abgehängten Gipskartonplattenwand (16) umfasst:
einen Steckerabschnitt (4) zum Sichern in einem Loch (14) in der abgehängten Gipskartonplattenwand des Steckerabschnitts, der eine Öffnung (6) zum Aufnehmen eines Befestigungselements (40) umfasst, die sich in einer ersten Richtung erstreckt;
eine längliche Rückplatte (2), die sich in einer zweiten Richtung erstreckt und an diametral gegenüberliegenden Seiten des Steckerabschnitts befestigt ist und davon hervorragt, wobei die Rückplatte eingerichtet ist, in Verwendung mit der Rückfläche der abgehängten Gipskartonplattenwand einzugreifen, wenn der Steckerabschnitt in dem Loch gesichert ist;
wobei der Umfang des Querschnitts des Steckerabschnitts in einer Ebene senkrecht zu der ersten Richtung einen minimalen begrenzenden Kreis aufweist, der einen ersten Durchmesser aufweist; und
wobei der Umfang des Querschnitts der Fixiervorrichtung durch den Steckerabschnitt in einer Ebene senkrecht zu der zweiten Richtung einen minimalen begrenzenden Kreis aufweist, der einen zweiten Durchmesser aufweist, der kleiner als oder gleich dem ersten Durchmesser ist.

8. Kit nach Anspruch 6, wobei die Fixiervorrichtung zum Befestigen eines Hakens (36) an einer abgehängten Gipskartonplattenwand (16) umfasst:
einen Steckerabschnitt (4) zum Sichern in einem Loch (14) in der abgehängten Gipskartonplattenwand des Steckerabschnitts, der eine Öffnung (6) zum Aufnehmen eines Befestigungselements (40) umfasst, die sich in einer ersten Richtung erstreckt;
eine längliche Rückplatte (2), die sich in einer zweiten Richtung erstreckt und an diametral gegenüberliegenden Seiten des Steckerabschnitts befestigt ist und davon hervorragt, wobei die Rückplatte eingerichtet ist, in Verwendung mit der Rückfläche der abgehängten Gipskartonplattenwand einzugreifen, wenn der Steckerabschnitt in dem Loch gesichert ist;
wobei der Umfang des Querschnitts des Steckerabschnitts in einer Ebene senkrecht zu der ersten Richtung einen minimalen begrenzenden Kreis aufweist; und
wobei die Fixiervorrichtung fähig ist, entlang der Länge der länglichen Rückplatte in einer zweiten Richtung durch ein Loch in einer abgehängten Gipskartonplattenwand gedrückt zu werden, das einen im Wesentlichen gleichen Querschnitt zu dem minimalen begrenzenden Kreis aufweist.

9. Kit nach einem der Ansprüche 6 bis 8, wobei das Kit weiter ein Werkzeug (24) zum Installieren der Fixiervorrichtung in einem Loch in einer abgehängten Gipskartonplattenwand umfasst, wobei das Werkzeug eingerichtet ist, von dem Steckerabschnitt der Fixiervorrichtung aufgenommen zu werden.

10. Kit nach einem der Ansprüche 6 bis 9, wobei eine oder mehrere Seiten des Steckerabschnitts (604) ein Schraubgewinde (611) umfassen.

11. Kit nach einem der Ansprüche 6 bis 10, wobei der Steckerabschnitt der Fixiervorrichtung eine Kerbe (10; 610) in der Fläche des Steckerabschnitts umfasst, die eingerichtet ist, das Werkzeug aufzunehmen.

12. Verfahren zum Befestigen eines Hakens (36) an einer abgehängten Gipskartonplattenwand (16), der Haken nach einem der Ansprüche 1 bis 5, wobei das Verfahren Folgendes umfasst:
Installieren einer Fixiervorrichtung (1) in der abgehängten Gipskartonplattenwand, die Fixiervorrichtung des Kits nach einem der Ansprüche 6 bis 11, wobei der Schritt zum Installieren der Fixiervorrichtung Folgendes umfasst:
Einsetzen eines Endes der länglichen Rückplatte (2) in ein Loch (14) in einer abgehängten Gipskartonplattenwand;
Drücken der Fixiervorrichtung vollständig durch das Loch und in einen Hohlraum hinter der Rückfläche der abgehängten Gipskartonplattenwand, während Halt eines Werkzeugs (24) erhalten bleibt, das an dem Steckerabschnitt (4) befestigt ist; und
Verwenden des Werkzeugs, um den Steckerabschnitt relativ zu dem Loch zu positionieren, um der Öffnung (6) zu erlauben, ein Befestigungselement (40) aufzunehmen;
wobei das Verfahren weiter Folgendes umfasst:
Einsetzen eines Befestigungselements durch die Öffnung in dem Haken und Befestigen des Befestigungselements an der Öffnung in dem Steckerabschnitt, um den Haken an der Vorderfläche der abgehängten Gipskartonplattenwand zu sichern.

13. Kit zum Befestigen eines Hakens (36) an einer Wand (16), das Folgendes umfasst:
eine Fixiervorrichtung (601), die einen Steckerabschnitt (604) zum Sichern in einem Loch (14) in einer abgehängten Gipskartonplattenwand (16) umfasst, wobei der Steckerabschnitt (604) eine Öffnung (606) zum Aufnehmen eines Befestigungselements (40), und eine Außenwand, die ein Schraubgewinde (611) umfasst, umfasst; und eine längliche Rückplatte (602), die von diametral gegenüberliegenden Seiten des Steckerabschnitts hervorragt, wobei die Rückplatte in Verwendung eingerichtet ist, mit der Rückfläche der abgehängten Gipskartonplattenwand einzugreifen, wenn der Steckerabschnitt in dem Loch gesichert ist;
einen Haken (36) zum Befestigen an einem Loch in einer Wand zum Aufhängen eines Gegenstands an der Wand, wobei der Haken Folgendes umfasst:
einen Körperabschnitt, der eine Vorderfläche (102), eine Rückfläche (104) zum Anliegen an der Wand, und eine bogenförmige Kante (106) zwischen zumindest einem Teil des Umfangs der Vorderfläche und zumindest einem Teil des Umfangs der Rückfläche umfasst;
eine Kerbe (116), die in der bogenförmigen Kante gebildet ist und sich darum erstreckt, um einen Draht zum Befestigen an einem Gegenstand, der auf dem Haken aufzuhängen ist, aufzunehmen; und
eine Öffnung (38), die sich von der Vorderfläche zu der Rückfläche durch den Körperabschnitt erstreckt, um ein Befestigungselement zum Befestigen des Hakens an dem Loch in der Wand aufzunehmen; und
ein Befestigungselement (40), das eingerichtet ist, durch die Öffnung in dem Haken eingesetzt zu werden und von dem Steckerabschnitt der Fixiervorrichtung aufgenommen zu werden.

14. System zum Befestigen eines Gegenstands an einer Wand, wobei das System zwei Haken umfasst, jeweils nach einem der Ansprüche 1 bis 5, wobei die Haken an jeweiligen Löchern in einer Wand befestigt sind, die im Wesentlichen horizontal voneinander beabstandet sind, wobei das System weiter einen Draht (122) umfasst, um den Gegenstand auf den Haken aufzuhängen, indem der Draht um die Kerben beider Haken geführt wird.

15. Verfahren zum Befestigen eines Gegenstands an einer Wand, wobei das Verfahren umfasst, zwei Haken an zwei jeweiligen Löchern in einer Wand mittels eines jeweiligen Befestigungselements zu befestigen, jeder Haken nach einem der Ansprüche 1 bis 5, wobei die Haken an jeweiligen Löchern in einer Wand befestigt sind, die im Wesentlichen horizontal voneinander beabstandet sind, wobei das Verfahren umfasst, einen Draht zum Aufhängen des Gegenstands auf den Haken, um die Kerben zu führen, die in den bogenförmigen Kanten beider Haken gebildet sind.

## Revendications

1. Crochet (36) à raccorder à un trou dans une paroi pour suspendre un article à la paroi, le crochet comprenant :
une portion de corps comprenant une face avant (102), une face arrière (104) pour venir en butée contre la paroi et un bord en forme d'arc (106) entre au moins une partie du périmètre de la face avant et au moins une partie du périmètre de la face arrière ;
une rainure (116) formée dans le, et s'étendant autour du, bord en forme d'arc pour recevoir un fil à raccorder à un article à suspendre au crochet ;
une portion surélevée (114) saillante depuis la face arrière de la portion de corps pour localiser le crochet dans le trou dans la paroi ; et
une ouverture (38) s'étendant depuis la face avant jusqu'à la face arrière à travers la portion de corps pour recevoir une attache pour raccorder le crochet au trou dans la paroi, dans lequel le bord de la portion surélevée entoure l'ouverture s'étendant à travers la portion de corps.

2. Crochet selon la revendication 1, dans lequel la portion de corps comprend un cylindre.

3. Crochet selon la revendication 1 ou 2, dans lequel la dimension du bord en forme d'arc dans la direction dans laquelle le bord s'étend est supérieure à la dimension du bord dans une direction perpendiculaire.

4. Crochet selon l'une quelconque des revendications précédentes, dans lequel la portion surélevée comprend une paroi, et/ou dans lequel la portion surélevée a un périmètre circulaire, facultativement dans lequel la portion surélevée est coaxiale à l'ouverture à travers la portion de corps.

5. Crochet selon l'une quelconque des revendications précédentes, dans lequel la face avant de la portion de corps comprend un évidement (110) pour recevoir une tête d'une attache.

6. Kit comprenant le crochet (36) selon l'une quelconque des revendications précédentes et un dispositif de fixation (1) pour raccorder le crochet au trou dans la paroi, le dispositif de fixation comprenant une portion de prise (4) à sécuriser dans un trou dans une paroi, dans lequel la portion de prise comprend une ouverture (6) pour recevoir une attache, dans lequel le kit comprend en outre une attache (40) agencée pour être insérée à travers l'ouverture dans le crochet et reçue par la portion de prise du dispositif de fixation, facultativement dans lequel le dispositif de fixation comprend une plaque arrière longitudinale (2) saillante depuis des côtés diamétralement opposés de la portion de prise, dans lequel la plaque arrière est agencée en utilisation pour se mettre en prise avec la face arrière d'une paroi de plaque de plâtre suspendue (16) lorsque la portion de prise est sécurisée dans un trou (14) dans la paroi de plaque de plâtre suspendue, facultativement dans lequel la plaque arrière longitudinale comprend une ou plusieurs ouvertures s'étendant à travers la plaque arrière longitudinale dans la première direction, dans lequel chaque ouverture dans la plaque arrière longitudinale est agencée pour recevoir une attache pour raccorder un article au dispositif de fixation.

7. Kit selon la revendication 6, dans lequel le dispositif de fixation, pour raccorder un crochet (36) à une paroi de plaque de plâtre suspendue (16), comprend :
une portion de prise (4) à sécuriser dans un trou (14) dans la paroi de plaque de plâtre suspendue, la portion de prise comprenant une ouverture (6) pour recevoir une attache (40) qui s'étend dans une première direction ;
une plaque arrière longitudinale (2) qui s'étend dans une seconde direction et est raccordée à et saillante depuis des côtés diamétralement opposés de la portion de prise, dans lequel la plaque arrière est agencée en utilisation pour se mettre en prise avec la face arrière de la paroi de plaque de plâtre suspendue lorsque la portion de prise est sécurisée dans le trou ;
dans lequel le périmètre de la coupe transversale de la portion de prise dans un plan perpendiculaire à la première direction a un cercle de délimitation minimal ayant un premier diamètre ; et
dans lequel le périmètre de la coupe transversale du dispositif de fixation à travers la portion de prise dans un plan perpendiculaire à la seconde direction a un cercle de délimitation minimal ayant un second diamètre inférieur ou égal au premier diamètre.

8. Kit selon la revendication 6, dans lequel le dispositif de fixation, pour raccorder un crochet (36) à une paroi de plaque de plâtre suspendue (16), comprend :
une portion de prise (4) à sécuriser dans un trou (14) dans la paroi de plaque de plâtre suspendue, la portion de prise comprenant une ouverture (6) pour recevoir une attache (40) qui s'étend dans une première direction ;
une plaque arrière longitudinale (2) qui s'étend dans une seconde direction et est raccordée à et saillante depuis des côtés diamétralement opposés de la portion de prise, dans lequel la plaque arrière est agencée en utilisation pour se mettre en prise avec la face arrière de la paroi de plaque de plâtre suspendue lorsque la portion de prise est sécurisée dans le trou ;
dans lequel le périmètre de la coupe transversale de la portion de bouchon dans un plan perpendiculaire à la première direction a un cercle de délimitation minimal ; et
dans lequel le dispositif de fixation est capable d'être poussé le long de la longueur de la plaque arrière longitudinale dans une seconde direction à travers un trou dans une paroi de plaque de plâtre suspendue ayant une coupe transversale sensiblement égale au cercle de délimitation minimal.

9. Kit selon l'une quelconque des revendications 6 à 8, le kit comprenant en outre un outil (24) pour installer le dispositif de fixation dans un trou dans une paroi de plaque de plâtre suspendue, dans lequel l'outil est agencé pour être reçu par la portion de bouchon du dispositif de fixation.

10. Kit selon l'une quelconque des revendications 6 à 9, dans lequel un ou plusieurs côtés de la portion de bouchon (604) comprennent un filetage (611).

11. Kit selon l'une quelconque des revendications 6 à 10, dans lequel la portion de bouchon du dispositif de fixation comprend une encoche (10 ; 610) dans la face de la portion de bouchon agencée pour accueillir l'outil.

12. Procédé pour raccorder un crochet (36) à une paroi de plaque de plâtre suspendue (16), le crochet étant selon l'une quelconque des revendications 1 à 5, le procédé comprenant :
l'installation d'un dispositif de fixation (1) dans la paroi de plaque de plâtre suspendue, le dispositif de fixation étant selon l'une quelconque des revendications 6 à 11, l'étape de l'installation du dispositif de fixation comprenant :
l'insertion d'une extrémité dans la plaque arrière longitudinale (2) dans un trou (14) dans une paroi de plaque de plâtre suspendue ;
la poussée du dispositif de fixation entièrement à travers le trou et dans un vide derrière la face arrière de la paroi de plaque de plâtre suspendue tout en maintenant un outil (24) raccordé à la portion de bouchon (4) ; et
l'utilisation de l'outil pour positionner la portion de bouchon par rapport au trou pour permettre à l'ouverture (6) de recevoir une attache (40) ;
le procédé comprenant en outre :
l'insertion d'une attache à travers l'ouverture dans le crochet et le raccordement de l'attache à l'ouverture dans la portion de bouchon pour sécuriser le crochet à la face avant de la paroi de plaque de plâtre suspendue.

13. Kit pour raccorder un crochet (36) à une paroi (16) comprenant :
un dispositif de fixation (601) comprend une portion de bouchon (604) à sécuriser dans un trou (14) dans une paroi de plaque de plâtre suspendue (16), la portion de bouchon (604) comprenant une ouverture (606) pour recevoir une attache (40) et une paroi extérieure comprenant un filetage (611) ; et une plaque arrière longitudinale (602) saillante depuis des côtés diamétralement opposés de la portion de bouchon, dans lequel la plaque arrière est agencée en utilisation pour se mettre en prise avec la face arrière de la paroi de plaque de plâtre suspendue lorsque la portion de bouchon est sécurisée dans le trou ;
un crochet (36) à raccorder à un trou dans une paroi pour suspendre un article à la paroi, le crochet comprenant :
une portion de corps comprenant une face avant (102), une face arrière (104) pour venir en butée contre la paroi et un bord en forme d'arc (106) entre au moins une partie du périmètre de la face avant et au moins une partie du périmètre de la face arrière ;
une rainure (116) formée dans le, et s'étendant autour du, bord en forme d'arc pour recevoir un fil à raccorder à un article à suspendre au crochet ; et
une ouverture (38) s'étendant depuis la face avant jusqu'à la face arrière à travers la portion de corps pour recevoir une attache pour raccorder le crochet au trou dans la paroi ; et
une attache (40) agencée pour être insérée à travers l'ouverture dans le crochet et reçue par la portion de bouchon du dispositif de fixation.

14. Système pour raccorder un article à une paroi, le système comprenant deux crochets, chacun d'eux étant selon l'une quelconque des revendications 1 à 5, dans lequel les crochets sont raccordés à des trous respectifs dans une paroi qui sont espacés sensiblement horizontalement l'un de l'autre, le système comprenant en outre un fil (122) pour suspendre l'article aux crochets en faisant passer le fil autour des rainures des deux crochets.

15. Procédé pour raccorder un article à une paroi, le procédé comprenant le raccordement de deux crochets à deux trous respectifs dans une paroi au moyen d'une attache respective, chaque crochet étant selon l'une quelconque des revendications 1 à 5, dans lequel les crochets sont raccordés à des trous respectifs dans une paroi qui sont espacés sensiblement horizontalement l'un de l'autre, le procédé comprenant en outre le passage d'un fil pour suspendre l'article aux crochets autour des rainures formées dans les bords en forme d'arc des deux crochets.
